# FASCICULE DE BREVET EUROPEEN

(11) **EP 3 602 740 B1**
(45) Date de publication et mention de la délivrance du brevet: **24.02.2021**
(21) Numéro de dépôt: 18714558.6
(22) Date de dépôt: 20.03.2018
(51) Int. Cl.: H02K 1/27

(54) **MOTEUR OU GÉNÉRATRICE ÉLECTROMAGNÉTIQUE COMPORTANT UN ROTOR À STRUCTURES AIMANTÉES COMPRENANT DES AIMANTS UNITAIRES ET UN STATOR À BOBINAGES CONCENTRIQUES**
MOTOR ODER ELEKTROMAGNETISCHER GENERATOR MIT EINEM ROTOR MIT MAGNETISIERTEN STRUKTUREN MIT EINHEITSMAGNETEN UND EINEM STATOR MIT KONZENTRISCHEN WICKLUNGEN
MOTOR OR ELECTROMAGNETIC GENERATOR COMPRISING A ROTOR WITH MAGNETISED STRUCTURES COMPRISING UNIT MAGNETS AND A STATOR WITH CONCENTRIC WINDINGS

(30) Priorité: 22.03.2017 FR 1700295; 01.12.2017 FR 1701268
(43) Date de publication de la demande: 05.02.2020
(73) Titulaire: Whylot SAS, 46100 Cambes (FR)
(72) Inventeur: RAVAUD, Romain, F-46240 Coeur de Causse (FR)
(86) Numéro de dépôt international: PCT/FR2018/000062
(87) Numéro de publication internationale: WO 2018/172633

(56) Documents cités:
- EP-A1- 1 982 403
- EP-A1- 2 773 023
- EP-A2- 1 624 555
- EP-A2- 2 043 230
- EP-A2- 2 306 619
- WO-A1-2016/116678
- WO-A1-2017/029926
- FR-A1- 2 996 378
- FR-A1- 3 014 255
- JP-A- 2005 341 696
- US-A- 5 619 087

## Description

La présente invention concerne un moteur ou une génératrice électromagnétique comportant au moins un rotor à structures aimantées comprenant des aimants unitaires et au moins un stator à bobinages concentriques.

La présente invention trouve une application avantageuse mais non limitative pour un moteur électromagnétique délivrant une forte puissance avec une vitesse de rotation du rotor élevée, ce qui est obtenu par les caractéristiques spécifiques du rotor selon la présente invention en interaction avec les caractéristiques spécifiques du ou des stators. Un tel moteur ou génératrice peut être utilisé par exemple comme moteur électromagnétique dans un véhicule automobile totalement électrique ou hybride.

Avantageusement mais non limitativement, le moteur ou la génératrice électromagnétique peut comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir non seulement un système compact rendu possible par la réduction de la masse et de l'encombrement du moteur axial pour un rendement optimal, mais également une très bonne tenue mécanique de la partie tournante, c'est-à-dire le ou les rotors, afin d'améliorer la fiabilité du système mais aussi du ou des stators.

Dans des applications à haute vitesse, il est nécessaire de réduire les pertes pour un rendement optimal. Dans des applications automobiles, la miniaturisation est de plus en plus recherchée. Pour cela il est important d'avoir un système compact rendu possible par la réduction de la masse et de l'encombrement du moteur axial, mais également une très bonne tenue mécanique de la partie tournante, afin d'améliorer la fiabilité du système.

Pour une machine électromagnétique à flux axial, le rotor comporte un corps sous forme d'un disque présentant deux faces circulaires reliées par une épaisseur, le disque étant délimité entre une couronne externe et une périphérie interne délimitant un évidement pour un arbre de rotation.

Au moins deux aimants permanents sont appliqués contre au moins une des deux faces circulaires du corps dite face de support. Pour un rotor mono-entrefer destiné à être associé à un stator, une seule face circulaire du corps porte des aimants tandis que pour un rotor à deux entrefers avec un stator respectif, ce sont les deux faces qui portent des aimants.

Les aimants sont chacun maintenus sur la face ou leur face respective par des moyens de maintien, un intervalle étant laissé entre lesdits au moins deux aimants sur une même face.

Pour le stator ou chaque stator, ceux-ci portent des éléments de bobinage comprenant une dent portant une bobine, la dent étant encadrée sur chacun de ses côtés par une encoche, un fil métallique bon conducteur étant enroulé sur la dent pour former chaque bobinage.

Quand la série ou les séries de bobinages sont alimentées électriquement, le rotor qui est solidarisé à l'arbre de sortie du moteur est soumis à un couple résultant du champ magnétique, le flux magnétique créé étant un flux axial pour une machine électromagnétique à flux axial et un flux radial pour une machine à flux radial.

Pour un moteur à forte puissance, le rotor tourne à des vitesses de rotation élevées. Le principal désavantage d'un moteur à forte vitesse de rotation réside dans la probabilité élevée de détachement de l'aimant ou des aimants du rotor ainsi que de casse au moins partielle du rotor. Le rotor d'un tel moteur doit donc être apte à supporter des vitesses de rotation élevées.

Le document EP-B-1 203 436 décrit une machine électrique à flux axial, avec un rotor sans fer en forme de disque disposé sur un arbre de machine et présentant des aimants permanents qui sont encastrés dans une matière plastique renforcée par fibres ou par tissu et avec un stator respectif de part et d'autre du rotor.

Les aimants permanents sont respectivement assemblés en engagement positif à la matière plastique renforcée par fibres ou par tissu qui les entoure. L'arbre de la machine avec deux brides de cet arbre de machine est assemblé d'une manière stable au rotor seulement par la matière plastique. La matière plastique forme conjointement avec les aimants permanents et l'arbre de machine un ensemble dimensionellement stable.

Ce document propose donc de créer en matière plastique un ensemble d'un seul tenant composé du rotor et de son arbre de rotation. Or il est connu qu'un tel ensemble peut être soumis à des contraintes entre le rotor et son arbre qui peuvent conduire à une rupture de l'ensemble. Une telle conception fragilise donc l'ensemble.

De plus, de par les aimants de grande taille utilisés pour le rotor dans ce document, un tel rotor dissipe une grande quantité de chaleur. Cette dissipation empêche d'utiliser des moyens de maintien axial sous forme de disques de recouvrement en composite et la dissipation de chaleur peut avoir des conséquences sur la tenue de l'enrobage avec un vieillissement accéléré de cet enrobage ainsi que des aimants.

Le document US-A-2011/0285237 divulgue un moteur à entrefer axial. Le but de ce document est une simplification des étapes de fabrication du rotor tout en empêchant les aimants permanents portés par ce rotor d'être déplacés ou desserrés lors du montage et du fonctionnement du rotor. Les aimants sont logés dans une structure monopièce faite d'une pièce moulée enserrant les aimants.

La pièce moulée présente des rainures séparant les aimants dans lesquelles sont introduites des nervures portées par un corps du rotor, permettant de bloquer la pièce moulée contre un mouvement de déplacement axial. Un maintien radial de la pièce moulée est effectué par des éléments concentriques interne et externe à la pièce moulée.

Ce document se destine donc à des aimants logés dans une pièce moulée et n'est d'aucun enseignement pour les aimants se trouvant séparés les uns des autres. De plus, les nervures ne maintiennent les aimants que par leur action sur la pièce moulée et n'agissent donc pas directement pour le maintien des aimants dans le rotor.

Selon ces deux états de la technique, au niveau du rotor, la seule amélioration de la force d'aimantation se traduit par l'emploi d'aimants permanents de plus en plus chers. L'effort d'innovation de l'état de la technique s'est reporté sur la partie stator du moteur ou de la génératrice, ce qui s'est traduit par la conception de stators de plus en plus sophistiqués et donc de plus en plus chers et difficiles à monter.

Le document EP-A-1 780 878 décrit une structure d'aimant en trois dimensions constituée d'une pluralité d'aimants unitaires, la structure d'aimant présentant une épaisseur formant sa dimension la plus petite, la structure intégrant au moins un maillage présentant des mailles délimitant chacune un logement pour un aimant unitaire respectif, chaque logement présentant des dimensions internes justes suffisantes pour permettre une introduction d'un aimant unitaire en son intérieur, les mailles étant en matériau isolant renforcé de fibres.

Cependant une telle structure d'aimant n'est pas adaptée pour résister à des vitesses de rotation élevées quand la ou les structures d'aimant sont portées par un rotor.

Le document FR-A-2 996 378 décrit une structure d'aimant comprenant des aimants unitaires. Ces aimants unitaires sont collés par de la résine sans interposition d'un quelconque élément de maintien entre les aimants unitaires. Une telle disposition ne pourrait pas supporter des vitesses élevées de rotation sans perte des aimants lors de la rotation

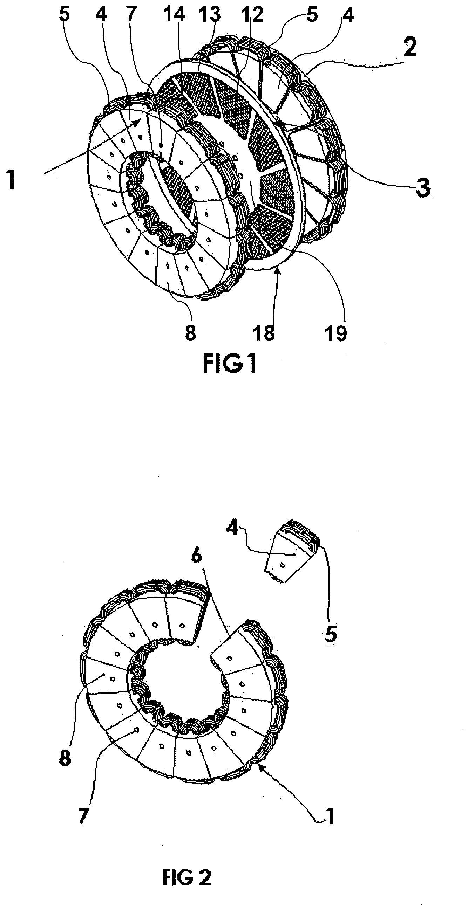

Le document WO2017029926 décrit un moteur ou une génératrice électromagnétique à flux axial comportant au moins un rotor (110) et au moins un stator (120), ledit au moins un rotor (110) comprenant des aimants permanents en tournant autour d'un arbre médian, les aimants permanents étant des structures d'aimant formant des pôles d'aimant, chaque structure d'aimant étant composée d'une pluralité d'aimants unitaires (112a à 112e), ledit au moins un stator (120) comprenant des bobinages (123) concentriques en comportant une série de plots (122) avec les bobinages (123) enroulés autour de chaque plot (122) (voir Figures 1 et 14 et paragraphes relatifs à ces figures dans ce document).

Le problème à la base de la présente invention est de concevoir un moteur ou une génératrice électrique à flux axial qui puisse présenter, d'une part, une partie rotor avec une quantité de chaleur émise réduite et des pertes rotoriques diminuées et, d'autre part, une partie stator spécifiquement adaptée pour tenir compte des modifications effectuées dans la partie rotor.

A cet effet, la présente invention concerne un moteur ou une génératrice électromagnétique selon la revendication indépendante 1.

Un des principaux buts de la présente invention est de remplacer un ou plusieurs aimants de taille importante par une pluralité de petits aimants. Il y a donc une création de flux magnétique par une multitude de petits aimants dont le nombre peut être d'au moins 20 et peut même dépasser 100 par pôle aimant. Un rotor de l'état de la technique pouvait comprendre de 1 à 10 aimants alors que la présente invention prévoit beaucoup plus d'aimants de petite taille dans chaque structure d'aimant.

Il convient de ne pas confondre une structure d'aimant, un rotor pouvant en porter par exemple de cinq à dix voire plus, avec les aimants unitaires qui sont nettement plus nombreux, un rotor pouvant en porter par exemple plusieurs centaines. Les petits aimants unitaires selon la présente invention peuvent être insérés dans des alvéoles respectives par un robot.

Ceci permet d'obtenir un rotor qui, entre autres avantages, peut tourner à grande vitesse et qui ne comprend pas de fer, ce qui limite les pertes rotoriques.

Selon l'invention, il a été découvert qu'une pluralité d'aimants unitaires donne une structure d'aimant plus résistante au niveau de la flexion globale du rotor tout en produisant très peu de chaleur du fait des faibles pertes générées, la chaleur dissipée par les aimants unitaires étant moindre que la chaleur dissipée par un aimant plus grand d'un seul tenant leur correspondant.

La structure d'aimant comporte une couche de composite non conductrice enrobant les aimants unitaires et le maillage. De plus, sa résistance mécanique peut être élevée et l'enrobage peut se faire aisément notamment par injection du composite sur une disposition d'aimants unitaires maintenus en place les uns par rapport aux autres par un moyen quelconque.

Avec un tel rotor, il est avantageux d'associer un ou deux stators comprenant des dents en fer avec des bobinages concentriques, ce qui est facile à réaliser.

La présente invention accomplit la démarche inverse de la démarche suivie par beaucoup de fabricants de moteurs et de génératrices électromagnétiques. Il était connu de faire porter l'effort d'innovation sur les stators en concevant des bobinages de plus en plus complexes et difficiles à concevoir.

Inversement, la démarche inventive de la présente invention s'est portée principalement sur un rotor ne contenant pas de fer et enrobé par du composite en contenant des structures d'aimant faites chacune d'une pluralité d'aimants. Ceci a permis d'utiliser un bobinage concentrique pour le ou les stators, alors qu'un tel bobinage concentrique ne donnait pas toute satisfaction avec des aimants permanents d'un seul tenant comme l'employait l'état de la technique le plus proche.

Il s'est avéré que l'utilisation d'une telle association d'un rotor composite avec au moins un stator en fer comportant des dents ou plots en fer et un bobinage concentrique pour le stator procurait une synergie en ce qui concerne la puissance du moteur ou de la génératrice utilisée ainsi que la facilité de fabrication et la résistance mécanique du moteur ou la génératrice.

Il est possible d'utiliser différents types de matériaux pour les aimants unitaires sélectionnés par exemple entre des alliages samarium-cobalt (Sm-Co), des alliages d'aluminium, de nickel et de cobalt, des ferrites dures et des matériaux Néodyme-Fer-Bore, l'important étant que ces matériaux supportent d'être usinés en plots de petite largeur ou de petit diamètre comparé à leur longueur.

Avantageusement, chaque structure d'aimant formant pôle d'aimant comprend plus de vingt aimants unitaires, les aimants unitaires étant liés par une résine les séparant ou insérés chacun dans un logement respectif délimité par une des mailles d'un maillage.

Le maillage, avantageusement en composite, maintient les aimants unitaires en place, ce qui concourt à la résistance du rotor. Le rotor à aimants placés dans des alvéoles de la présente invention est conçu de façon à réduire les pertes dans le rotor avec des moyens de solidarisation permettant de maintenir les aimants et de pallier à l'effet de la force axiale ou radiale et de la force centrifuge à très haute vitesse.

Comparé à l'état de la technique illustré par le document US-A-2011/0285237, le rotor selon l'invention peut convenir à des aimants qui ne sont pas directement solidarisés entre eux alors que dans le document de l'état de la technique les aimants sont logés dans une pièce moulée formant structure de support. Ainsi, la présente invention donne une solution qui convient à toute forme de disposition des aimants sur le rotor.

La pièce moulée de l'état de la technique peut présenter des ruptures de zones, étant donné qu'elle est sollicitée par plusieurs nervures. Ce n'est pas le cas d'une structure alvéolaire qui est connue pour sa résistance mécanique. La structure alvéolaire peut être en forme de nid d'abeille mais l'important est que les alvéoles reçoivent des aimants de petite taille.

La combinaison des formes des aimants et des moyens de maintien des aimants uniquement réalisés par un enrobage en composite permet de réduire les pertes dans le rotor et donc l'échauffement et de minimiser le risque de démagnétisation des aimants.

Avantageusement, les structures d'aimant sont enrobées individuellement dans une couche de composite interne auquel cas les structures d'aimant sont disposées directement adjacentes les unes aux autres concentriquement à l'arbre médian dudit au moins un rotor, ou les structures d'aimant sont disposés concentriquement à l'arbre médian en laissant un espacement entre elles rempli par des portions de la couche d'enrobage externe.

Il peut donc y avoir au moins deux enrobages successifs concourant à la solidité du rotor, un enrobage de la structure d'aimant entourant aussi les aimants unitaires et un enrobage de l'ensemble des structures d'aimant.

Avantageusement, au moins la couche d'enrobage externe et les disques de recouvrement sont renforcés par des fibres. La présence de fibres accroît la résistance mécanique du rotor.

Avantageusement, les fibres de la couche d'enrobage externe et les fibres des disques de recouvrement sont orientées dans des directions différentes. Les disques de recouvrement permettent de renforcer le maintien axial des aimants. Les disques de recouvrement en composite n'étaient pas fréquemment utilisés dans l'état de la technique car ne résistant pas à la dissipation de chaleur engendrée par les aimants.

Comme la présente invention utilise une multitude d'aimants unitaires remplaçant un aimant compact de l'état de la technique, la dissipation de chaleur est moindre et des disques de recouvrement peuvent être utilisés comme moyens de maintien axial, ces disques remplaçant avantageusement des moyens de maintien axial entre aimants et corps du rotor, nécessitant le cas échéant des modifications des aimants ou de leur enrobage pour réaliser des moyens complémentaires de fixation avec des moyens de fixation portés par le rotor.

Avantageusement, la couche d'enrobage externe et les disques de recouvrement sont renforcés de fibres orientées dans plusieurs directions.

Avantageusement, une frette en composite entoure circonférentiellement les structures d'aimant à une périphérie extérieure dudit au moins un rotor, la couche d'enrobage externe enrobant aussi la frette.

La frette concourt, si besoin est, au maintien radial des aimants en supplément de celui garanti par la couche externe d'enrobage en composite.

Avantageusement, la frette fait partie d'une armature en composite comprenant un moyeu concentrique à l'arbre médian, des branches s'étendant entre le moyeu et la frette, chaque branche séparant deux structures d'aimant adjacentes. Ce mode de réalisation est simplement optionnel. Il n'y a pas ou peu d'action de maintien procurée par les branches sur les structures d'aimant, les branches servant principalement à maintenir la frette au reste du rotor.

Avantageusement, les plots dudit au moins un stator sont unitaires en présentant chacun des première et deuxième surfaces jointes par une épaisseur, les premières surfaces quadrangulaires des plots, d'une part, et les deuxièmes surfaces quadrangulaires des plots, d'autre part, étant alignées dans un plan radial respectif en position montée dudit au moins un stator dans le moteur ou la génératrice, les bobinages étant enroulés autour de l'épaisseur.

Avantageusement, les plots dudit au moins un stator sont en fer.

Avantageusement, les plots présentent chacun des première et deuxième surfaces quadrangulaires jointes par une épaisseur, les premières surfaces quadrangulaires des plots, d'une part, et les deuxièmes surfaces quadrangulaires des plots, d'autre part, étant alignées dans un plan radial respectif en position montée dudit au moins un stator dans le moteur ou la génératrice, les bobinages étant enroulés autour de l'épaisseur.

Avantageusement, les premières surfaces quadrangulaires, d'une part, et les deuxièmes surfaces quadrangulaires, d'autre part, sont mises respectivement bout à bout, les plots formant une couronne concentrique à l'arbre médian.

Avantageusement, une encoche s'étendant dans un plan radial entoure l'épaisseur de chaque plot pour le logement des bobinages autour du plot.

Avantageusement, chaque plot est composé d'un empilement de feuilles en tôle.

Avantageusement, chaque plot présente un taraudage médian le traversant, un moyen de fixation amovible solidarisant chaque plot individuellement à une couronne support appliquée contre les plots ou chaque plot est solidarisé par des moyens de fixation permanents ou amovibles aux deux plots qui lui sont adjacents.

Avantageusement, le moteur ou la génératrice comprend au moins un rotor entouré de deux stators, les deux stators intercalant ledit au moins un rotor entre eux.

Avantageusement, le moteur ou la génératrice est à flux axial.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective d'un rotor encastré entre deux stators, le rotor et les stators étant montrés espacés des uns des autres et présentant les caractéristiques respectivement d'un rotor et d'un stator conformément à un moteur ou génératrice électromagnétique selon une forme de réalisation de la présente invention, des structures d'aimant formant des pôles d'aimants étant composées d'aimant unitaires,
- la figure 2 est une représentation schématique d'une vue en perspective d'un stator faisant partie d'un moteur ou génératrice électromagnétique selon une forme de réalisation de la présente invention, un plot de section quadrangulaire étant montré espacé du reste du stator, le stator présentant des bobinages enroulés sur des plots unitaires indépendants les uns des autres quand non solidarisés ensemble,

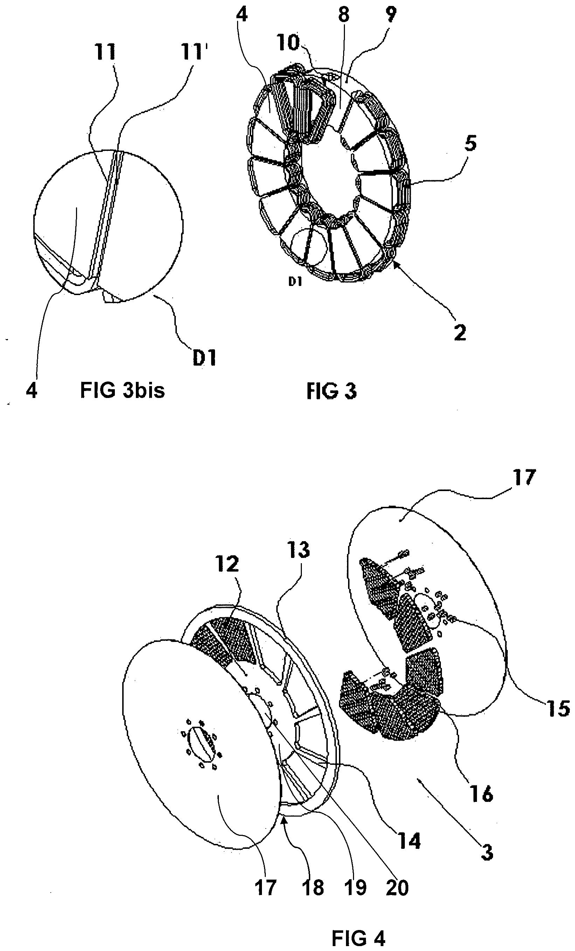

- les figures 3 et 3bis sont des représentations schématique d'une vue en perspective pour la figure 3 sous un autre angle de vue qu'à la figure 2 d'un stator faisant partie d'un moteur ou génératrice électromagnétique selon une forme de réalisation de la présente invention, deux bobinages étant montrés espacés des plots sur lesquels les bobinages sont respectivement enroulés, la figure 3bis montrant un agrandissement des bords adjacents de deux plots,
- la figure 4 est une représentation schématique d'une vue en perspective éclatée d'un moteur ou génératrice électromagnétique selon une forme de réalisation de la présente invention, le rotor comprenant une armature de composite présentant un moyeu interne et une frette externe reliés par des branches séparant les structures d'aimant comportant une pluralité d'aimants unitaires formant pôle d'aimant les uns des autres.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différentes pièces ne sont pas représentatives de la réalité.

En se référant à toutes les figures, la présente invention concerne un moteur ou une génératrice électromagnétique comportant au moins un rotor 3 et au moins un stator 1, 2. Le rotor 3 ou chaque rotor 3 comprend des aimants permanents 12 et tourne autour d'un arbre médian tandis que le ou les stators, avantageusement deux stators 1, 2 intercalant entre eux un rotor 3, comprennent des bobinages 5.

A la figure 1, il est montré un rotor 3 encadré par deux stators 1, 2, les deux stators 1, 2 intercalant ledit au moins un rotor 3 entre eux. Ceci n'est pas limitatif pour la présente invention. Avantageusement, le moteur ou la génératrice est à flux axial.

En se référant à toutes les figures, selon l'invention, le ou chaque rotor 3 comprend des structures d'aimant 12 formant des pôles d'aimant, chaque structure d'aimant 12 étant composée d'une pluralité d'aimants unitaires 15.

Ceci signifie qu'il y a des structures d'aimant 12 formant des pôles d'aimants distincts mais que chaque structure d'aimant 12 comporte une pluralité d'aimants unitaires, dont un aimant unitaire référencé 15 à la figure 4, cette référence 15 étant prise pour qualifier tout aimant unitaire. Il peut donc y avoir plusieurs structures d'aimant 12 mais ces structures d'aimant 12 ne sont pas assimilables à la pluralité d'aimants unitaires 15 dans le sens de la présente invention.

A la figure 1, il est visible un ensemble d'un rotor 3 et deux stators 1 et 2. Sur un premier stator il est visible des taraudages 7 de fixation de chaque plot 4 sur un support en forme de disque.

A la figuré 2, il est montré un stator avec un plot 4 séparé des autres plots. Seul un plot 4 par stator est référencé 4 aux figures 1 à 3 mais ce qui est énoncé pour ce plot 4 l'est pour tous les autres plots montrés aux figures 1 à 3. Il en va de même pour un bobinage 5, un taraudage, un bord latéral 6, une première face 8 et une encoche 10.

Le bobinage 5 est monté sur le plot 4 avant assemblage, puis mise en contact des plots 4 par leurs bords latéraux 6 et maintien par des moyens de fixation du type vis passant par les taraudages 7 ou par collage ou soudage des premières faces 8 et/ou respectivement de deuxièmes faces entre elles, opposées aux premières faces 8 et non visibles à la figure 2.

A la figure 3, pour le deuxième stator 2, le bobinage est monté directement dans le circuit magnétique 9, par une encoche 10 en faisant passer le fil entre des bords latéraux dans l'épaisseur 11, 11' de deux plots 4 adjacents. Les encoches 10 de deux plots 4 adjacents sont en vis-à-vis et se complètent.

A la figure 4, il est montré le rotor 3 en éclaté pour un mode de réalisation non limitatif avec un rotor 3 comprenant une armature 18. Un seul aimant unitaire ou pion est référencé 15 à cette figure 4, 12 étant la référence pour une seule structure d'aimant comportant une multitude d'aimants unitaires 15. La référence 16 identifie une résine d'enrobage pour un aimant unitaire 15 assurant aussi son collage. L'armature 18 comprend des branches, dont une seule est référencée 14, reliant un moyeu 19 à la frette 13, le passage de l'arbre de rotation étant référencé 20. Des disques de recouvrement pour le maintien axial des structures d'aimant 12 sont référencés 17.

Les aimants unitaires 15 sont sous la forme de pions allongés en présentant une longueur s'étendant selon l'épaisseur 11, 11' de la structure d'aimant 12. Le pion allongé peut être cylindrique ou sous la forme d'un polyèdre avec au moins une face longitudinale plane orientée vers une surface de travail de la structure d'aimant 12 qui est la surface en vis à vis des bobinages 5 dans un moteur ou génératrice électromagnétique.

Chaque pion allongé présente une ligne d'aimantation s'étendant approximativement selon sa longueur, les aimants unitaires 15 étant positionnés dans la structure d'aimant 12 à distance les uns des autres afin d'être isolés électriquement les uns par rapport aux autres.

La longueur de chaque pion peut être supérieure au diamètre de la face longitudinale plane pour un pion cylindrique ou à une plus grande diagonale reliant deux sommets de ladite face longitudinale pour un pion en forme de polyèdre. Pour une face longitudinale régulière comme un hexagone, toutes les diagonales sont équivalentes. Ceci peut permettre par exemple d'insérer chaque aimant unitaire 15 sous la forme d'un pion dans un espace respectif parmi les cavités d'un nid d'abeille en tant que maillage de tenue des aimants unitaires 15.

De plus, un rapport d'une surface de la face longitudinale du pion sur la surface de travail totale de la structure d'aimant 12 peut être inférieur à, ce qui montre qu'un aimant unitaire tient très peu de place sur la surface de travail totale de la structure d'aimant 12. Ceci permet d'avoir un nombre très élevé de pions sur la face longitudinale du pion.

Chaque structure d'aimant 12 peut former un tout en étant enrobé dans une couche de composite. Il est possible que la structure d'aimant 12 soit sous la forme d'un pavé avec une surface polygonale dans un plan radial à l'arbre médian.

Dans un autre mode de réalisation, il est possible qu'il n'existe une seule structure d'aimant 12 concentrique à l'arbre médian, désignée superstructure d'aimant 12, par exemple en forme de couronne, cette superstructure étant composée de structures d'aimant 12 comportant chacune une pluralité d'aimants unitaires 15, les structures d'aimant 12 étant enrobées individuellement de même que la superstructure d'aimant 12.

Pour un maintien axial des structures d'aimant 12, des disques de recouvrement 17 peuvent être disposés axialement sur chacune de deux faces axiales opposées du rotor 3. Il n'a donc pas nécessité de prévoir des moyens de maintien axial des structures d'aimant 12, par exemple en munissant les branches 14 de moyens de maintien axial coopérant avec des moyens complémentaires de maintien axial portés par les structures d'aimant 12, les disques de recouvrement 17 effectuant ce maintien.

Les disques de recouvrement 17 peuvent être en composite. Les disques de recouvrement 17 et les structures d'aimant 12 peuvent être enrobés dans une couche d'enrobage externe de composite définissant le contour extérieur dudit au moins un rotor 3. Il peut y avoir ainsi plusieurs enrobages se superposant par exemple un enrobage des aimants unitaires 15, avantageusement par de la colle et/ou à l'aide d'un maillage d'un matériau composite, puis un enrobage de chaque structure d'aimant 12 par une couche d'enrobage interne suivi d'un enrobage externe, le cas échéant avec l'armature 18 possiblement dotée d'une frette 13, de branches 14 et d'un moyeu 19, par une couche de composite des structures d'aimant 12 et des disques de recouvrement 17 ensemble.

Le ou les stators 1, 2 comprennent des bobinages 5 concentriques en comportant une série de plots 4 avec des bobinages 5 enroulés autour de chaque plot 4, les plots 4 étant solidarisés entre eux. De tels bobinages 5 sont de fabrication aisée.

Comme précédemment mentionné, chaque structure d'aimant 12 formant pôle d'aimant peut comprendre plus de vingt aimants unitaires 15, ce qui montre que les aimants unitaires 15 sont relativement petits par rapport à une structure d'aimant 12 et ne sont pas assimilables à une structure d'aimant 12. Sans que cela soit limitatif, pour un rotor 3 de taille moyenne équipant un moteur ou génératrice selon l'invention, les aimants unitaires 15 dans le cadre de la présente invention peuvent avoir une dimension de 4 mm.

Les aimants unitaires 15 peuvent être liés entre eux dans une structure d'aimant 12 par une résine 16 les séparant tout en les maintenant ou en plus en pouvant être insérés chacun dans un logement respectif délimité par une des mailles d'un maillage en composite.

Ainsi, la structure d'aimant 12 peut intégrer au moins un maillage présentant des mailles délimitant chacune un logement ou alvéole pour un aimant unitaire respectif. Chaque logement peut présenter des dimensions internes justes suffisantes pour permettre une introduction d'un aimant unitaire en son intérieur tout en laissant un espace entre le logement et l'aimant unitaire rempli par une résine 16 renforcée de fibres, les mailles étant en matériau isolant renforcé de fibres, cet espace étant rendu le plus petit possible pour un meilleur encadrement de chaque aimant unitaire.

Ceci permet d'assurer le maintien des aimants unitaires 15 dans leur logement respectif même par vitesse de déplacement élevée, par exemple une vitesse de rotation élevée pour une ou des structures d'aimant 12 faisant partie d'un rotor 3, ce qui n'est pas limitatif. Le maillage peut être en nid d'abeille, ce qui n'est pas limitatif.

Comme précédemment mentionné, les structures d'aimant 12 peuvent être enrobées individuellement dans une couche de composite, avantageusement renforcée de fibres, auquel cas les structures d'aimant 12 sont disposées directement adjacentes les unes aux autres concentriquement à l'arbre médian dudit au moins un rotor 3.

Dans un autre mode de réalisation, les structures d'aimant 12 peuvent être disposés concentriquement à l'arbre médian en laissant un espacement entre elles rempli par des portions de la couche d'enrobage externe ou aussi occupé par une branche 14 d'une armature 18.

Au moins la couche d'enrobage externe et les disques de recouvrement 17 peuvent être renforcés par des fibres. Ceci peut être le cas pour chaque couche d'enrobage interne entourant une structure d'aimant 12 individuellement.

Les fibres de la couche d'enrobage externe et les fibres des disques de recouvrement 17 peuvent être orientées dans des directions différentes.

Sans que cela soit limitatif, une frette 13 en composite peut entourer circonférentiellement les structures d'aimant 12 à une périphérie extérieure dudit au moins un rotor 3, la couche d'enrobage externe enrobant aussi la frette 13. Un maintien radial des structures d'aimant 12 est ainsi assuré.

Dans un mode de réalisation particulier et optionnel, comme montré à la figure 4, la frette 13 peut faire partie d'une armature 18 en composite comprenant un moyeu 19 concentrique à l'arbre médian. Dans ce mode de réalisation, des branches 14 peuvent s'étendre entre le moyeu 19 et la frette 13, chaque branche 14 séparant deux structures d'aimant 12 adjacentes mais ne possédant pas de moyens de retenue de la structure d'aimant 12, ce qui simplifie leur conception.

En effet, une retenue axiale des structures d'aimant 12, ou de la superstructure d'aimant 12 dans le cas d'une unique structure d'aimant 12 est assurée par les disques de recouvrement 17. En ce qui concerne une retenue radiale des structures d'aimant 12, une telle retenue peut être assurée accessoirement par la frette 13. En règle générale, c'est la couche d'enrobage externe qui effectue les tenues circonférentielle, radiale et axiales des structures d'aimant 12 ou de la superstructure d'aimant 12.

Ainsi, l'armature 18 peut être de forme discoïdale et partiellement creuse en comportant des branches 14 s'étendant sensiblement radialement ou inclinées en direction radiale entre un pourtour interne formant moyeu 19, délimitant intérieurement un passage 20 pour un arbre de rotation du rotor 3, et la frette 13 externe formant la couronne externe de l'armature 18.

Les branches 14 peuvent être inclinées par rapport à l'arbre de rotation du rotor 3 comme le sont des pales d'hélice et avoir une largeur grandissante plus on s'éloigne du centre du support.

Dans cette forme de réalisation, l'armature 18 peut être recouverte sur au moins une face par un disque de recouvrement 17 en tant que moyens de maintien axial des aimants unitaires 15 et de consolidation du rotor 3. Ceci peut se faire sur les deux faces opposées par un disque de recouvrement 17 respectif.

Comme montré notamment à la figure 2, les plots 4 d'un stator 1, 2 peuvent présenter chacun des première et deuxième surfaces 8 opposées jointes par une épaisseur 11, 11'. Ces premières et deuxièmes surfaces 8 peuvent être quadrangulaires, avec, pour chaque surface, un côté interne le plus proche de l'arbre de maintien du rotor 3 arrondi plus petit qu'un côté externe arrondi pour chaque surface.

Les premières surfaces 8 quadrangulaires des plots 4, d'une part, et les deuxièmes surfaces quadrangulaires des plots 4, d'autre part, peuvent être alignées dans un plan radial respectif en position montée du stator 1, 2 dans le moteur ou la génératrice, les bobinages 5 étant enroulés autour de l'épaisseur 11, 11' de chaque plot 4. Les plots 4 peuvent être en fer ou contenir du fer.

Chacun des plots 4 peut présenter des première et deuxième surfaces 8 quadrangulaires jointes par une épaisseur 11, 11', comme montré à la figure 3bis. Comme montré aux figures 2 et 3, les premières surfaces 8 quadrangulaires des plots 4, d'une part, et les deuxièmes surfaces quadrangulaires des plots 4, d'autre part, peuvent être alignées dans un plan radial respectif en position montée dudit au moins un stator 1, 2 dans le moteur ou la génératrice.

Les bobinages 5 peuvent alors être enroulés autour de l'épaisseur 11, 11' de chaque plot 4. L'ensemble forme une couronne continue, un plot 4 étant adjacent à deux plots répartis sur des côtés opposés du plot 4.

Ainsi, les premières surfaces 8 quadrangulaires, d'une part, et les deuxièmes surfaces quadrangulaires, d'autre part, sont mises respectivement bout à bout, les plots 4 formant une couronne concentrique à l'arbre médian.

En se référant aux figures 3 et 3bis, une encoche 10 s'étendant dans un plan radial peut entourer l'épaisseur 11, 11' de chaque plot 4 pour le logement des bobinages 5 autour du plot 4. Cette encoche 10 peut s'étendre tout autour du plot 4 dans la portion médiane de son épaisseur 11, 11'. Chaque plot 4 peut être composé d'un empilement de feuilles en tôle.

Deux modes de fixation des plots 4 peuvent être utilisés en alternative. Dans un premier mode montré aux figures 1 et 2, chaque plot 4 peut présenter un taraudage 7 médian le traversant, un moyen de fixation amovible solidarisant chaque plot 4 individuellement à une couronne support appliquée contre les plots 4.

Dans un deuxième mode, non montré aux figures, chaque plot 4 peut être solidarisé par des moyens de fixation permanents ou amovibles aux deux plots 4 qui lui sont adjacents. Cette solidarisation peut se faire par collage, par soudage ou par utilisation de moyens mécaniques de solidarisation.

## Revendications

1. Moteur ou génératrice électromagnétique à flux axial comportant au moins un rotor (3) et au moins un stator (1, 2), ledit au moins un rotor (3) comprenant des aimants permanents (12) en tournant autour d'un arbre médian, les aimants permanents étant des structures d'aimant (12) formant des pôles d'aimant, chaque structure d'aimant (12) étant composée d'une pluralité d'aimants unitaires (15), ledit au moins un stator (1, 2) comprenant des bobinages (5) concentriques en comportant une série de plots (4) avec les bobinages (5) enroulés autour de chaque plot (4), **caractérisé en ce que** les aimants unitaires (15) sont sous forme de de pions allongés présentant une longueur s'étendant selon l'épaisseur (11, 11') de la structure d'aimant (12), des disques de recouvrement (17) étant disposés axialement sur chacune de deux faces axiales opposées dudit au moins un rotor (3), les disques de recouvrement (17) étant en composite, les disques de recouvrement (17) et les structures d'aimant (12) étant enrobés dans une couche d'enrobage externe de composite définissant le contour extérieur dudit au moins un rotor (3) et **en ce que** les plots (4) sont solidarisés entre eux.

2. Moteur ou génératrice selon la revendication 1, dans lequel chaque structure d'aimant (12) formant pôle d'aimant comprend plus de vingt aimants unitaires (15), les aimants unitaires (15) étant liés par une résine (16) les séparant ou insérés chacun dans un logement respectif délimité par une des mailles d'un maillage.

3. Moteur ou génératrice selon la revendication 1 ou 2, dans lequel les structures d'aimant (12) sont enrobées individuellement dans une couche de composite interne auquel cas les structures d'aimant (12) sont disposées directement adjacentes les unes aux autres concentriquement à l'arbre médian dudit au moins un rotor (3), ou les structures d'aimant (12) sont disposés concentriquement à l'arbre médian en laissant un espacement entre elles rempli par des portions de la couche d'enrobage externe.

4. Moteur ou génératrice selon la revendication précédente, dans lequel au moins la couche d'enrobage externe et les disques de recouvrement (17) sont renforcés par des fibres.

5. Moteur ou génératrice selon la revendication précédente, dans lequel les fibres de la couche d'enrobage externe et les fibres des disques de recouvrement (17) sont orientées dans des directions différentes.

6. Moteur ou génératrice selon l'une quelconque des revendications précédentes, dans lequel une frette (13) en composite entoure circonférentiellement les structures d'aimant (12) à une périphérie extérieure dudit au moins un rotor (3), la couche d'enrobage externe enrobant aussi la frette (13).

7. Moteur ou génératrice selon la revendication précédente, dans lequel la frette (13) fait partie d'une armature (18) en composite comprenant un moyeu (19) concentrique à l'arbre médian, des branches (14) s'étendant entre le moyeu (19) et la frette (13), chaque branche (14) séparant deux structures d'aimant (12) adjacentes.

8. Moteur ou génératrice selon l'une quelconque des revendications précédentes, dans lequel les plots (4) dudit au moins un stator (1, 2) sont en fer.

9. Moteur ou génératrice selon la revendication précédente, dans lequel les plots (4) présentent chacun des première et deuxième surfaces (8) quadrangulaires jointes par une épaisseur (11, 11'), les premières surfaces (8) quadrangulaires des plots (4), d'une part, et les deuxièmes surfaces quadrangulaires des plots (4), d'autre part, étant alignées dans un plan radial respectif en position montée dudit au moins un stator (1, 2) dans le moteur ou la génératrice, les bobinages (5) étant enroulés autour de l'épaisseur (11, 11').

10. Moteur ou génératrice selon la revendication précédente, dans lequel les premières surfaces (8) quadrangulaires, d'une part, et les deuxièmes surfaces quadrangulaires, d'autre part, sont mises respectivement bout à bout, les plots (4) formant une couronne concentrique à l'arbre médian.

11. Moteur ou génératrice selon l'une quelconque des trois revendications précédentes, dans lequel une encoche (10) s'étendant dans un plan radial entoure l'épaisseur (11, 11') de chaque plot (4) pour le logement des bobinages (5) autour du plot (4).

12. Moteur ou génératrice selon l'une quelconque des quatre revendications précédentes, dans lequel chaque plot (4) est composé d'un empilement de feuilles en tôle.

13. Moteur ou génératrice selon l'une quelconque des cinq revendications précédentes, dans lequel chaque plot (4) présente un taraudage (7) médian le traversant, un moyen de fixation amovible solidarisant chaque plot (4) individuellement à une couronne support appliquée contre les plots (4) ou chaque plot (4) est solidarisé par des moyens de fixation permanents ou amovibles aux deux plots (4) qui lui sont adjacents.

14. Moteur ou génératrice selon l'une quelconque des revendications précédentes, lequel comprend au moins un rotor (3) entouré de deux stators (1, 2), les deux stators (1, 2) intercalant ledit au moins un rotor (3) entre eux.

## Patentansprüche

1. Elektromagnetischer Axialflussmotor oder -generator, der mindestens einen Rotor (3) und mindestens einen Stator (1, 2) beinhaltet, wobei der mindestens eine Rotor (3) um eine Mittenwelle drehend Dauermagneten (12) umfasst, wobei die Dauermagneten Magnetstrukturen (12) sind, die Magnetpole bilden, wobei sich jede Magnetstruktur (12) aus einer Vielzahl von Einheitsmagneten (15) zusammensetzt, wobei der mindestens eine Stator (1, 2) konzentrische Wicklungen (5) umfasst, indem er eine Reihe von Kontakten (4) mit den Wicklungen (5) beinhaltet, die um jeden Kontakt (4) gewickelt sind, **dadurch gekennzeichnet, dass** die Einheitsmagneten (15) in Form von länglichen Steinen sind, die eine Länge aufweisen, die sich über die Dicke (11, 15, 11') der Magnetstruktur (12) erstreckt, wobei Bedeckungsscheiben (17) axial auf jeder der beiden gegenüberliegenden axialen Seiten des mindestens einen Rotors (3) angeordnet sind, wobei die Bedeckungsscheiben (17) aus Verbundwerkstoff sind, die Bedeckungsscheiben (17) und die Magnetstrukturen (12) mit einer äußeren Hüllschicht aus Verbundwerkstoff umhüllt sind, die die Außenkontur des mindestens einen Rotors (3) bildet, und dadurch, dass die Kontakte (4) fest miteinander verbunden sind.

2. Motor oder Generator nach Anspruch 1, wobei jede Magnetstruktur (12), die einen Magnetpol bildet, mehr als zwanzig Einheitsmagneten (15) umfasst, wobei die Einheitsmagneten (15) durch ein Harz (16) verbunden sind, das sie trennt, oder jeder in eine jeweilige Aufnahme eingeführt ist, die durch eine der Maschen eines Maschennetzes begrenzt ist.

3. Motor oder Generator nach Anspruch 1 oder 2, wobei die Magnetstrukturen (12) einzeln in einer Innenschicht aus Verbundstoff eingehüllt sind, in welchem Fall die Magnetstrukturen (12) direkt aneinander angrenzend konzentrisch an der Mittenwelle des mindestens einen Rotors (3) angeordnet sind, oder die Magnetstrukturen (12) konzentrisch an der Mittenwelle angeordnet sind, indem sie einen Freiraum zwischen sich belassen, der durch Abschnitte der äußeren Hüllschicht gefüllt wird.

4. Motor oder Generator nach dem vorstehenden Anspruch, wobei mindestens die äußere Hüllschicht und die Bedeckungsscheiben (17) durch Fasern verstärkt sind.

5. Motor oder Generator nach dem vorstehenden Anspruch, wobei die Fasern der äußeren Hüllschicht und die Fasern (5) der Bedeckungsscheiben (17) in unterschiedlichen Richtungen ausgerichtet sind.

6. Motor oder Generator nach einem der vorstehenden Ansprüche, wobei eine Bandage (13) aus Verbundwerkstoff die Magnetstrukturen (12) an einem Außenumfang des mindestens einen Rotors (3) umfänglich umgibt, wobei die äußere Hüllschicht auch die Bandage (13) einhüllt.

7. Motor oder Generator nach dem vorstehenden Anspruch, wobei die Bandage (13) einer Armatur (18) aus Verbundwerkstoff angehört, die eine zur Mittenwelle konzentrische Nabe (19) umfasst, wobei sich Äste (14) zwischen der Nabe (19) und dem Bund (13) erstrecken, wobei jeder Ast (14) zwei angrenzende Magnetstrukturen (12) trennt.

8. Motor oder Generator nach einem der vorstehenden Ansprüche, wobei die Kontakte (4) des mindestens einen Stators (1, 2) aus Eisen sind.

9. Motor oder Generator nach dem vorstehenden Anspruch, wobei die Kontakte (4) jeweils erste und zweite viereckige Oberflächen (8) umfassen, die durch eine Dicke (11, 11') verbunden sind, wobei die ersten viereckigen Oberflächen (8) der Kontakte (4) einerseits, und die zweiten viereckigen Oberflächen der Kontakte (4) andererseits in einer jeweiligen radialen Ebene in montierter Position des mindestens einen Stators (1, 2) in dem Motor oder dem Generator ausgerichtet sind, wobei die Wicklungen (5) um die Dicke (11, 11') herum gewickelt sind.

10. Motor oder Generator nach dem vorstehenden Anspruch, wobei die ersten viereckigen Oberflächen (8) einerseits, und die zweiten viereckigen Oberflächen andererseits jeweils aneinandergesetzt werden, wobei die Kontakte (4) einen konzentrischen Kranz zur Mittenwelle bilden.

11. Motor oder Generator nach einem der drei vorstehenden Ansprüche, wobei sich eine Kerbe (10), die sich in einer radialen Ebene erstreckt, die Dicke (11, 11') eines jeden Kontakts (4) zur Aufnahme der Wicklungen (5) um den Kontakt (4) herum umgibt.

12. Motor oder Generator nach einem der vier vorstehenden Ansprüche, wobei jeder Kontakt (4) aus einer Stapelung von Blechtafeln gebildet wird.

13. Motor oder Generator nach einem der fünf vorstehenden Ansprüche, wobei jeder Kontakt (4) ein mittleres Innengewinde (7) aufweist, das durch diesen hindurchführt, wobei ein abnehmbares Befestigungsmittel jeden Kontakt (4) einzeln fest mit einem Trägerkranz verbindet, der an den Kontakten (4) angelegt ist, oder jeder Kontakt (4) durch permanente oder abnehmbare Befestigungsmittel fest mit den beiden angrenzenden Kontakten (4) verbunden ist.

14. Motor oder Generator nach einem der vorstehenden Ansprüche, welcher mindestens einen Rotor (3) umfasst, der von zwei Statoren (1, 2) umgeben ist, wobei die beiden Statoren (1, 2) den mindestens einen Rotor (3) zwischen sich einklemmen.

## Claims

1. Axial-flux electromagnetic motor or generator including at least one rotor (3) and at least one stator (1, 2), said at least one rotor (3) comprising permanent magnets (12) rotating about a middle shaft, the permanent magnets being magnet structures (12) forming magnet poles, each magnet structure (12) being composed of a plurality of unit magnets (15), said at least one stator (1, 2) comprising concentric windings (5) while including a series of studs (4) with the windings (5) wound around each stud (4), **characterised in that** the unit magnets (15) are in the form of elongate pins having a length extending along the thickness (11, 15, 11') of the magnet structure (12), covering discs (17) being disposed axially on each of the two opposite axial faces of said at least one rotor (3), the covering discs (17) being made from composite, the covering discs (17) and the magnet structures (12) being coated in an external coating layer of composite defining the external contour of said at least one rotor (3), and **in that** the studs (4) are connected together.

2. Motor or generator according to claim 1, wherein each magnet structure (12) forming a magnet pole comprises more than twenty unit magnets (15), the unit magnets (15) being connected by a resin (16) separating them or each inserted in a respective housing delimited by one of the meshes of a lattice.

3. Motor or generator according to claim 1 or 2, wherein the magnet structures (12) are individually coated in a layer of internal composite, in which case the magnet structures (12) are disposed directly adjacent to each other concentrically with the middle shaft of said at least one rotor (3), or the magnet structures (12) are disposed concentrically with the middle shaft while leaving a space between them filled by portions of the external coating layer.

4. Motor or generator according to the preceding claim, wherein at least the external coating layer and the covering discs (17) are reinforced by fibres.

5. Motor or generator according to the preceding claim, wherein the fibres of the external coating layer and the fibres 5 of the covering discs (17) are oriented in different directions.

6. Motor or generator according to any one of the preceding claims, wherein a hoop (13) made from composite circumferentially surrounds the magnet structures (12) at an outer periphery of said at least one rotor (3), the external coating layer also coating the hoop (13).

7. Motor or generator according to the preceding claim, wherein the hoop (13) forms part of an armature (18) made from composite, comprising a hub (19) concentric with the middle shaft, arms (14) extending between the hub (19) and the hoop (13), each arm (14) separating two adjacent magnet structures (12).

8. Motor or generator according to any one of the preceding claims, wherein the studs (4) of said at least one stator (1, 2) are made from iron.

9. Motor or generator according to the preceding claim, wherein the studs (4) each have first and second quadrangular surfaces (8) joined by a thickness (11, 11'), the first quadrangular surfaces (8) of the studs (4) on the one hand and the second quadrangular surfaces of the studs (4) on the other hand being aligned in a respective radial plane in the mounted position of said at least one stator (1, 2) in the motor or generator, the windings (5) being wound around the thickness (11, 11').

10. Motor or generator according to the preceding claim, wherein the first quadrangular surfaces (8) on the one hand and the second quadrangular surfaces on the other hand are put respectively end to end, the studs (4) forming a ring concentric with the middle shaft.

11. Motor or generator according to any one of the preceding claims, wherein a notch (10) extending in a radial plane surrounds the thickness (11, 11') of each stud (4) for housing the windings (5) around the stud (4).

12. Motor or generator according to any one of the preceding four claims, wherein each stud (4) is composed of a stack of leaves made from sheet metal.

13. Motor or generator according to any one of the preceding five claims, wherein each stud (4) has a middle thread (7) passing through it, a removable fixing means securing each stud (4) individually to a support ring applied against the studs (4) or each stud (4) is secured by permanent or removable fixing means to the two studs (4) that are adjacent thereto.

14. Motor or generator according to any one of the preceding claims, which comprises at least one rotor (3) surrounded by two stators (1, 2), the two stators (1, 2) interposing said at least one rotor (3) between them.
